# EUROPÄISCHE PATENTSCHRIFT

(11) **EP 1 308 324 B1**
(45) Veröffentlichungstag und Bekanntmachung des Hinweises auf die Patenterteilung: **19.03.2008**
(21) Anmeldenummer: 02022397.0
(22) Anmeldetag: 10.10.2002
(51) Int. Cl.: B60G 21/055

(54) **Kurvenbahngetriebe, insbesondere für den Einsatz in einer geteilten Stabilisatoranordnung eines Fahrzeug-Fahrwerks**
Curved path transmission, especially for the application in split stabiliser bars
Dispositif d'accouplement à came, en particulier pour une barre stabilisatrice en deux parties

(30) Priorität: 06.11.2001 DE 10154398
(43) Veröffentlichungstag der Anmeldung: 07.05.2003
(73) Patentinhaber: Bayerische Motoren Werke Aktiengesellschaft, 80809 München (DE)
(72) Erfinder: Schmidt, Roland, 82131 Stockdorf (DE)

(56) Entgegenhaltungen:
- EP-A- 0 365 377
- DE-A- 10 002 455
- GB-A- 518 238
- US-A- 3 198 539
- US-A- 3 391 722
- US-A- 3 606 801

## Beschreibung

Die Erfindung betrifft ein Kurvenbahngetriebe, insbesondere für den Einsatz in einer geteilten Stabilisatoranordnung eines Fahrzeug-Fahrwerks, wobei mehrere Gruppen von jeweils auf einer gemeinsamen Achse angeordneten Mitnahmeelementen in diesen zugeordneten Kurvenbahnen geführt sind, so dass bei einer gemeinsamen Lageänderung aller durch ein Koppelelement verbundener Gruppen-Achsen sog. Kurvenbahnträger, in denen die Kurvenbahnen vorgesehen sind, gegeneinander bewegt werden. Zum bekannten Stand der Technik wird auf die DE 100 02 455 A1 verwiesen.

Es ist bekannt, dass an vertikal beweglichen Radaufhängungen eines Kraftfahrzeug-Fahrwerks sog. aktive Stabilisatoranordnungen vorgesehen sein können. Aufgabe dieser Stabilisatoranordnungen ist es, die bei Kurvenfahrten aufgrund der Querbeschleunigung auftretende Wankbewegung um die Fahrzeuglängsachse deutlich zu mindern. Dazu werden zwei zu einer Fahrzeugachse gehörende Radaufhängungen über eine geteilte Stabilisatoranordnung miteinander verbunden, die durch einen Aktuator angetrieben wird. Im Betrieb wird eine gegensinnige Drehbewegung der Stabilisatorhälften von dem Aktuator erzeugt und über Koppelstangen auf zwei an je einer Radaufhängung angelenkte Hebel bzw. Kurbelarme übertragen. Hierdurch kann bei geeigneter Regelung eine Kompensation der während einer Kurvenfahrt auftretenden Wankbewegung des Fahrzeugaufbaus erreicht werden.

In der o.g. deutschen Patentanmeldung 100 02 455 ist ein relativ einfacher Aktuator für eine geteilte Stabilisatoranordnung beschrieben, bei der zur Bildung eines Aktuators ein Getriebe mit einem Antrieb in Form eines elektromotorischen Stellantriebs, einer hydraulischen Zylinder-Kolbeneinheit o.ä. verbunden ist. Ausgehend von der Erkenntnis, dass ein Getriebe in einer geteilten Stabilisatoranordnung maximal einen Verdrehwinkel von ca. 45° einstellen können muss, ist für das Getriebe ein Kurvenbahn-Getriebe zur Verwendung vorgeschlagen. Zur Einstellung eines Verdrehwinkels wird ein sog. Koppelelement über sog. Mitnahmeelemente gleichzeitig in voneinander verschiedenen Kurvenbahnen zweier voneinander getrennter Kurvenbahnträger entlang einer gemeinsamen Längsachse geführt. Eine axiale Verschiebung des Koppelelements wird beispielsweise durch eine elektromotorisch angetriebene Gewindespindel hervorgerufen, sodass sich in einfacher und zuverlässiger Weise über die in den Kurvenbahnen geführten Mitnahmeelemente gewünschte Verdrehbewegungen der Kurvenbahnträger gegeneinander erzielen lassen, die über die jeweils an einem Kurvenbahnträger drehfest angebrachten Stabilisatorhälften an die jeweiligen Radaufhängungen weitergeleitet werden.

Offensichtlich ist, dass die zwischen den Stabilisatorhälften im genannten Aktuator und somit auch im Kurvenbahngetriebe zu übertragenden Momente einen ziemlich hohen Wert annehmen können. Um die Festigkeitsanforderungen an die betroffenen Bauteile in vernünftigen Grenzen zu halten, empfiehlt es sich daher, im Kurvenbahngetriebe mehrere Kurvenbahnen und somit auch mehrere darin geführte Mitnahmeelemente parallel nebeneinander angeordnet vorzusehen, so dass bspw. bei Vorsehen dreier parallel nebeneinander angeordneter Kurvenbahnen mit darin geführten Mitnahmeelementen jede dieser parallel geschalteten sog. "Einheiten" jeweils nur ein Drittel des gesamten zu übertragenden Moments übertragen muss.

In diesem Zusammenhang sei darauf hingewiesen, dass diese sog. Parallelschaltung" mehrerer Kurvenbahnen bereits in der eingangs genannten DE 100 02 455 A1 gezeigt ist, und zwar u.a. am dort in den Figuren 3a, 3b dargestellten Ausführungsbeispiel. Ebenfalls in diesem Zusammenhang erwähnt sei, dass mit der vorliegenden Patentanmeldung ausdrücklich auf den Offenbarungsgehalt der genannten vorveröffentlichten deutschen Patentanmeldung des gleichen Anmelders Bezug genommen wird. So ist in dieser deutschen Patentanmeldung 100 02 455 A1 nicht nur ein bevorzugtes technisches Umfeld, nämlich die gegenseitige Verdrehbewegung der beiden Stabilisatorhälften einer geteilten Stabilisatoranordnung eines Fahrzeugs näher erläutert, sondern es ist darin auch eine Ausführungsform des Kurvenbahngetriebes dargestellt, auf die im weiteren auch in der vorliegenden Patentanmeldung Bezug genommen wird. So ist in der DE 100 02 455 A1 ein Kurvenbahngetriebe mit zwei konzentrisch zueinander angeordneten hohlzylindrischen Kurvenbahnträgern sowie mit einem auf deren gemeinsamer Zylinderachse längsverschiebbaren Koppelelement für drei Gruppen von Mitnahmeelementen dargestellt. Nachdem zwei gegeneinander verdrehbare Kurvenbahnträger vorgesehen sind, wird jede Gruppe von Mitnahmeelementen von einem auf einer gemeinsamen Achse angeordneten Rollenpaar gebildet, von welchem die erste Rolle in einer zugeordneten Kurvenbahn des ersten Kurvenbahnträgers und die zweite Rolle in einer zugeordneten Kurvenbahn des zweiten Kurvenbahnträgers geführt ist. Und nachdem - wie bereits erwähnt - in der DE 100 02 455 A1 drei Gruppen von Rollenpaaren dargestellt sind, sind auch zugehörige drei Paare von Kurvenbahnen vorgesehen, wobei die erste Kurvenbahn eines Kurvenbahn-Paares im ersten Kurvenbahnträger und die zweite Kurvenbahn eines Kurvenbahn-Paares im zweiten Kurvenbahnträger vorgesehen ist. Um dabei diese drei Gruppen von Mitnahmeelementen bzw. Kurvenbahnen über dem Umfang der Kurvenbahnträger gleichmäßig verteilt anzuordnen, schließen zwei einander benachbarte sog. Gruppen-Achsen, auf denen ein Rollenpaar bzw. allgemein ein Paar von Mitnahmeelementen angeordnet ist, zwischen sich einen Winkel von 120° ein.

Solange maximal drei Gruppen von einander parallel geschalteten Mitnahmeelementen bzw. Kurvenbahn-Paaren an einem Kurvenbahngetriebe nach dem Oberbegriff des Anspruchs 1 vorgesehen sind, solange ist eine Gleichverteilung der zu übertragenden Kräfte bzw. Momente zwischen diesen drei Gruppen gewährleistet. Analog einem 3-Bein ergibt sich dies daraus, dass auch bei Vorliegen unvermeidbarer Fertigungstoleranzen ein geringfügiges Kippen des die sog. Gruppen-Achsen tragenden Elements, das als Koppelelement bezeichnet wird, sämtliche drei Paare von Mitnahmeelementen an ihren jeweiligen Kurvenbahnen zur Anlage bringen kann. Möchte man jedoch mehr als drei Gruppen von Mitnahmeelementen (und zugeordneten Kurvenbahnen) vorsehen, um die zu übertragenden Kräfte bzw. Momente noch weiter aufzuteilen, so ist dies nur teilweise erfolgreich, da mehr als drei Rollenpaare bzw. allg. Gruppen von Mitnahmeelementen aufgrund unvermeidbarer Fertigungstoleranzen nicht alle gleichermaßen belastet werden. Vielmehr wird zumindest eines dieser vier oder mehr Rollenpaare bzw. eine dieser vier oder mehr Gruppen von Mitnahmeelementen nicht oder nur zum Teil tragen, d.h. kräfteübertragendend an der jeweiligen zugeordneten Kurvenbahn anliegen.

Eine Abhilfemaßnahme für diese geschilderte Problematik aufzuzeigen, ist Aufgabe der vorliegenden Erfindung.
Die Lösung dieser Aufgabe ist an einem Kurvenbahngetriebe nach dem Oberbegriff des Anspruchs 1 dadurch gekennzeichnet, dass zumindest zwei Gruppen-Achsen in deren für die genannte Lageänderung mögliche Bewegungsrichtung betrachtet gegeneinander zumindest geringfügig beweglich sind und nicht nur gegenüber dem Koppelelement, sondern auch gegeneinander abgestützt sind. Vorteilhafte Aus- und Weiterbildungen sind Inhalt der Unteransprüche.

Erfindungsgemäß sind somit zumindest zwei Gruppen von Mitnahmeelementen (bspw. Rollenpaaren, die auf einer gemeinsamen Dreh-Achse angeordnet und in den Kurvenbahnen zweier Kurvenbahnträger geführt sind) zumindest geringfügig gegeneinander bewegbar. Wenn dann wie vorgeschlagen zumindest zwei dieser Gruppen bzw. Gruppen-Achsen direkt oder indirekt gegeneinander abgestützt sind, so wird immer dann, wenn eine erste Gruppe von Mitnahmeelementen, die ziemlich frei innerhalb der Kurvenbahn liegt ohne vollständig an deren Wand anzuliegen und somit im wesentlichen keine Kraftübertragung ermöglicht, unter Einfluss einer zweiten Gruppe von Mitnahmeelementen, die vollständig an der zugeordneten Kurvenbahn-Wand anliegt und somit eine vollständige Kraftübertragung bewerkstelligt, derart relativ verschoben, dass auch die erste Gruppe von Mitnahmeelementen an der Kraftübertragung teilhaben kann. Bei geeigneter Wahl der Abmessungen der gegenseitigen Abstützflächen, d.h. insbesondere bei Flächengleichheit wird sich dann selbsttätig ein Kräftegleichgewicht einstellen, derart, dass jede der genannten Gruppen den gleichen Kräfte-Betrag, d.h. den gleichen Anteil an der insgesamt von diesen Gruppen zu übertragenden Kraft überträgt.

Grundsätzlich gibt es die unterschiedlichsten Möglichkeiten, wie sich zwei oder mehrere Gruppen von Mitnahmeelementen direkt oder indirekt, letztendlich aber über ihre sog. Gruppen-Achsen gegeneinander oder aneinander abstützen können. Dabei ist eine zusätzliche Abstützung am sog. Koppelelement, mit Hilfe bzw. unter Einwirkung dessen die Gruppen-Achsen bzw. Mitnahmeelemente eine gemeinsame Lageveränderung erfahren, d.h. innerhalb der jeweiligen Kurvenbahnen verschoben werden können, erforderlich.

Wenn - wie dies in der eingangs genannten DE 100 02 455 A1 gezeigt ist - zumindest zwei konzentrisch zueinander angeordnete hohlzylindrische Kurvenbahnträger vorgesehen sind und das bereits genannte Koppelelement, welches die Gruppen von Mitnahmeelementen trägt bzw. führt, längs der gemeinsamen Zylinder-Achse der Kurvenbahnträger verschiebbar ist, so ist es besonders vorteilhaft, wenn auf diesem Koppelelement zueinander konzentrisch zumindest zwei Mitnahmeelement-Träger geringfügig gegeneinander beweglich angeordnet sind, deren zur Zylinder-Achse im wesentliche senkrechte Seitenflächen jeweils an einem gemeinsamen Stützelement, das sich seinerseits am Koppelelement abstützt, abgestützt sind. Das sog. Stützelement wirkt dann als Zwischenglied oder Übertragungsglied, mit Hilfe dessen eine zunächst stärker an der Kräfteübertragung beteiligte Gruppe von Mitnahmeelementen eine zunächst weniger an der Kräfteübertragung beteiligte andere Gruppe von Mitnahmeelementen derart verschiebt, dass letztlich beide bzw. alle Gruppen von Mitnahmeelementen im wesentlichen gleichermaßen an der aktuellen Kraftübertragung teilhaben. Im Sinne einer vorteilhaften Funktionsvereinigung kann dabei dieses Stützelement auch für die Verbindung zwischen den Gruppen von Mitnahmeelementen sowie dem Koppelelement zuständig sein, d.h. dass bei einer Verschiebebewegung bzw. Lageänderung des Koppelelements diese Gruppen bzw. die genannten Mitnahmeelement-Träger über dieses Stützelement mitbewegt werden.

Seine soeben beschriebene Funktion kann das Stützelement in den unterschiedlichsten Ausführungsvarianten wahrnehmen. Beispielsweise kann es sich beim Stützelement um eine sich seinerseits geeignet am Koppelelement abstützende Scheibe handeln, die dabei eine geringfügige Kippbewegung oder dgl. ausführen kann, so dass einerseits wie gewünscht sämtliche Mitnahmeelement-Träger zusammen mit dem Koppelelement verschoben werden können und dass gleichzeitig ein erster Mitnahmeelement-Träger einen zweiten Mitnahmeelement-Träger derart verschieben kann, dass beide Träger bzw. deren Mitnahmeelemente einen im wesentlichen gleichen Anteil an der Kraftübertragung leisten.

Besonders vorteilhaft ist jedoch eine andere Variante des Stützelementes, wonach dieses als ein im wesentlichen ringförmiges Elastomerelement ausgeführt und in einem am Koppelelement befestigten Topf eingebettet ist. Ein solches Elastomerelement ist - wie der Name sagt - elastisch verformbar und im wesentlichen inkompressibel. Wirkt nun die Seitenfläche des ersten Mitnahmeelement-Trägers mit stärkerem Anpressdruck auf dieses Elastomerelement ein als die Seitenfläche des zweiten Mitnahmeelement-Trägers, so wird das Stützelement sich entsprechend den durch den genannten Topf bestimmten Freiräumen verformen und dabei den zweiten Mitnahmeelement-Träger derart gegenüber dem ersten Mitnahmeelement-Träger verschieben, dass beide (bzw. bei Vorhandensein von mehr als zwei Mitnahmeelement-Trägern alle) Mitnahmeelement-Träger im wesentlichen im gleichem Umfang an der Kraftübertragung bzw. Momentenübertragung zwischen den Mitnahmeelementen und den Kurvenbahn-Trägern beteiligt sind.

In diesem Zusammenhang sei darauf hingewiesen, dass auch bei Vorsehen lediglich zweier Mitnahmeelement-Träger die eingangs geschilderte ungleiche Beteiligung an der gesamten Kraftübertragung auftreten kann, und zwar insbesondere dann, wenn ein Mitnahmeelement-Träger zumindest zwei Gruppen von Mitnahmeelementen trägt. Dann ergibt sich eine besonders vorteilhafte Anordnung, wenn sich dieser (zumindest eine) Mitnahmeelement-Träger ausgehend von der Zylinderachse der Kurvenbahnträger in verschiedene Radial-Richtungen erstreckt, so insbesondere in einander entgegengesetzte Richtungen, d.h. dass der Mitnahmeelement-Träger quasi "stabförmig" ausgebildet und zentral auf dem Koppelement gelagert ist und an seinen beiden freien Enden jeweils eine Gruppe bzw. ein Paar von Mitnahmeelementen trägt.

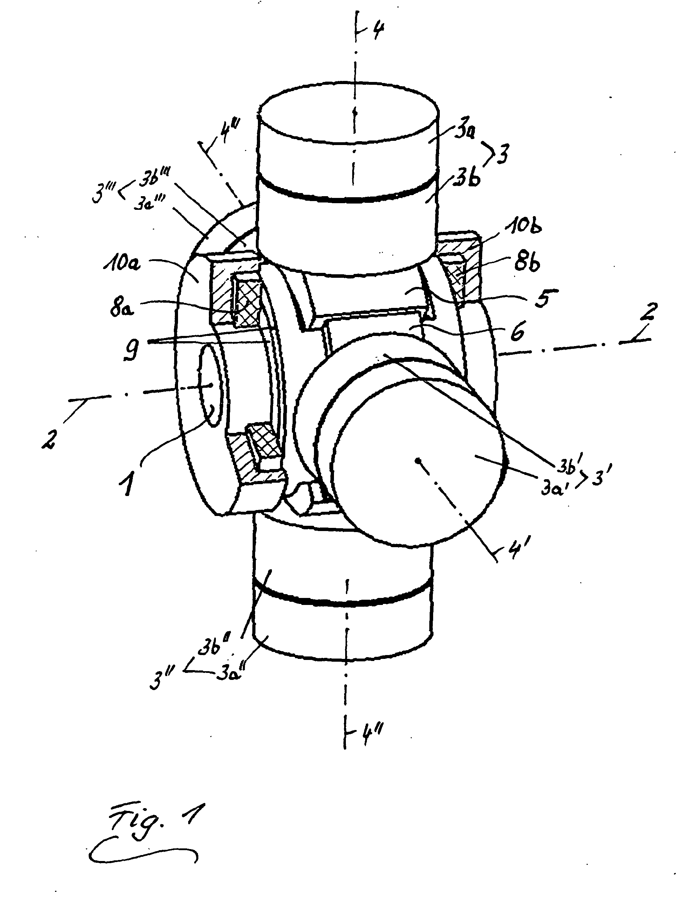

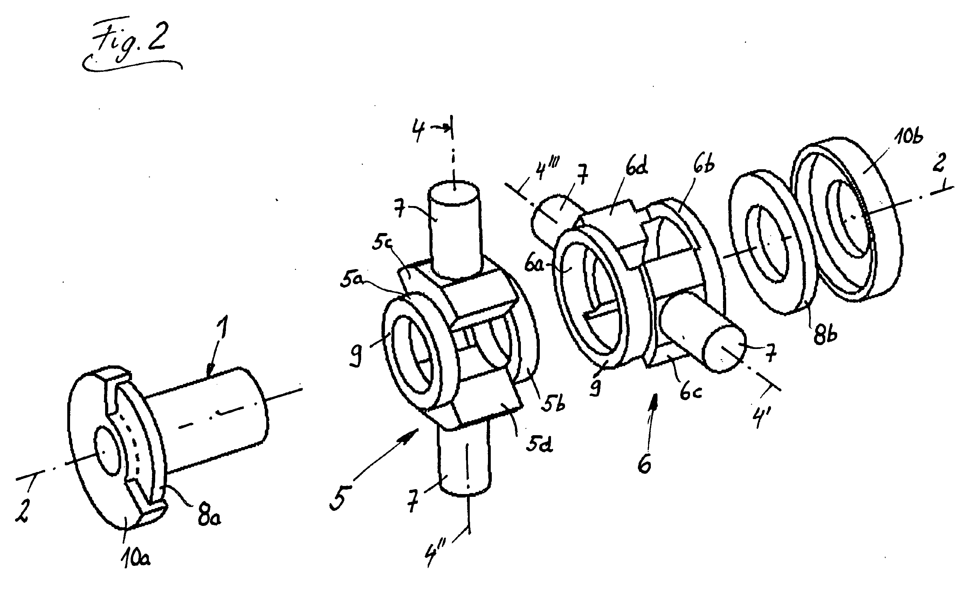

Im folgenden wird die Erfindung anhand eines bevorzugten Ausführungsbeispiels weiter erläutert, wobei in den beigefügten **Figuren 1****,** **2** lediglich zwei erfindungsgemäß angeordnete Mitnahmeelement-Träger eines Kurvenbahngetriebes dargestellt sind, und zwar in **Fig.1** im zusammengebauten Zustand und in **Fig.2** in einer Explosionsdarstellung. Bezüglich des möglichen Aufbaus des Kurvenbahngetriebes als solches, nämlich bezüglich der Anordnung dieser beiden auf einem bzw. dem Koppelelement angeordneten Mitnahmeelement-Träger innerhalb zweier konzentrisch zueinander angeordneter hohlzylindrischer Kurvenbahnträger, längs deren Zylinderachse das Koppelelement verschiebbar ist, so wie dies im Patentanspruch 2 der vorliegenden Patentanmeldung angegeben ist, wird ausdrücklich auf die eingangs genannte DE 100 02 455 A1 des gleichen Anmelders verwiesen.

In den beigefügten Figuren ist mit der Bezugsziffer 1 ein sog. Koppelelement bezeichnet, das auf nicht näher dargestellte Weise längs einer Achse 2 (sog. Zylinder-Achse 2) verschoben werden kann. Bspw. kann sich längs dieser Achse 2 eine Gewindespindel erstrecken, die von einem Elektromotor in Rotation versetzt werden kann und die sich durch das als Mutter auf dieser Gewindespindel aufgeschraubte bzw. aufgesetzte Koppelelement 1 hindurch erstreckt. Als Zylinder-Achse 2 wird die Achse 2 deshalb bezeichnet, da sie die Achse zweier figürlich nicht dargestellter Hohlzylinder bildet, die konzentrisch zueinander angeordnet sind, und in deren Mantelflächen sog. Kurvenbahnen (in Form entsprechender Durchbrüche) eingearbeitet sind. Daher wurden und werden diese Hohlzylinder in der vorangegangenen und weiteren Beschreibung auch als Kurvenbahnträger bezeichnet.

In die (ebenso wie die Kurvenbahnträger nicht dargestellten) Kurvenbahnen greifen sog. Mitnahmeelemente 3a, 3b bzw. 3a', 3b' bzw. 3a", 3b" bzw. 3a''', 3b''' ein, die jeweils in Form von Rollen ausgebildet sind. Jeweils zwei dieser Mitnahmeelemente, die mit den Zusatz-Buchstaben "a" und "b" bezeichnet sind, bilden eine Gruppe von Mitnahmeelementen, so dass hier insgesamt vier Gruppen 3, 3', 3", 3''' von Mitnahmeelementen vorgesehen sind. Dabei wurde bereits erwähnt, dass die genannten Kurvenbahnen in zwei zueinander konzentrisch angeordneten hohlzylindrischen Kurvenbahnträgen vorgesehen sind, so dass es folglich zumindest eine radial weiter innen und somit näher an der Zylinder-Achse 2 liegende Kurvenbahn sowie zumindest eine radial weiter außen und somit etwas mehr von der Zylinderachse 2 entfernt liegende Kurvenbahn gibt. Wie eingangs erwähnt wurde, sind jedoch auf jedem Kurvenbahnträger mehrere (einander identische) Kurvenbahnen vorgesehen, und zwar im Umfang dieses bevorzugten Ausführungsbeispiels jeweils vier derartige Kurvenbahnen, die über dem Querschnitt der Kurvenbahnträger betrachtet gleichmäßig verteilt angeordnet sind, d.h. dass über dem Hohlzylinder-Querschnitt betrachtet quasi in jedem Quadranten eine Kurvenbahn liegt.

In die radial "äußeren" Kurvenbahnen des einen größeren Durchmesser aufweisenden hohlzylindrischen Kurvenbahnträgers greifen nun die mit dem Zusatz-Buchstaben "a" bezeichneten Mitnahmeelemente ein, also die Mitnahmeelemente 3a, 3a', 3a" und 3a'''. In die radial "inneren" Kurvenbahnen des einen kleineren Durchmesser aufweisenden hohlzylindrischen Kurvenbahnträgers greifen die mit dem Zusatz-Buchstaben "b" bezeichneten Mitnahmeelemente ein, also die Mitnahmeelemente 3b, 3b', 3b" und 3b'''. Dabei sind sämtliche Mitnahmeelemente in Form von Rollen ausgebildet, die um eine sog. Gruppen-Achse 4 bzw. 4' bzw. 4" bzw. 4''' verdrehbar sind, d.h. die "Rollen" 3a und 3b sind um die Gruppen-Achse 4 verdrehbar und die "Rollen" bzw. Mitnahmeelemente 3a' und 3b' der Gruppe 3' von Mitnahmeelementen sind um die Gruppen-Achse 4' verdrehbar. Analog ist der Gruppe 3" von Mitnahmeelementen die Gruppen-Achse 4" und der Gruppe 3''' von Mitnahmeelementen die Gruppen-Achse 4''' zugeordnet. Da sich wie ersichtlich die Gruppen 3 und 3" bzw. die Gruppen 3' und 3''' bezüglich der Achse 2 einander gegenüberliegen, fallen die Gruppen-Achsen 4 und 4" bzw. die Gruppen-Achsen 4' und 4''' zusammen, jedoch ist dies nur eine spezielle Ausführungsform der vorliegenden Erfindung und somit nicht erfindungswesentlich.

Getragen werden die Gruppen 3, 3', 3", 3''' von Mitnahmeelementen von sog. Mitnahmeelement-Trägern 5, 6. Auch aufgrund der zuletzt genannten speziellen Anordnung, nämlich dass die Gruppen-Achsen 4 und 4" ebenso wie die Gruppen-Achsen 4' und 4''' zusammenfallen, sind hier nur zwei Mitnahmeelement-Träger 5, 6 erforderlich, von denen sich jeder ausgehend von der Zylinder-Achse 2 in verschiedene; speziell einander entgegengesetzte Radial-Richtungen erstreckt, d.h. dass jeder Mitnahmeelement-Träger 5, 6 quasi "stabförmig" ausgebildet ist und an seinen beiden freien Enden jeweils eine Gruppe bzw. ein Paar von Mitnahmeelementen trägt. Konkret trägt der mit der Bezugsziffer 5 bezeichnete Mitnahmeelement-Träger die Gruppen 3 und 3" von Mitnahmeelementen, während die Mitnahmeelemente 3a' und 3b' am ersten freien Ende des Mitnahmeelement-Trägers 6 und die Mitnahmeelemente 3a''' und 3b''' am zweiten freien Ende des Mitnahmeelement-Trägers 6 vorgesehen sind.

Die beiden Mitnahmeelement-Träger 5, 6 sind jeweils zentral, d.h. in ihrem mittleren Bereich auf dem Koppelement 1 gelagert und dabei konzentrisch zueinander angeordnet. Diese konzentrische Anordnung ist dadurch realisiert, dass jeder Mitnahmeelement-Träger 5 bzw. 6 mit seitlichen sog. Stützringen 5a und 5b bzw. 6a und 6b versehen ist, wobei die Stützringe 5a und 6a bzw. 5b und 6b bezüglich der Zylinder-Achse 2 jeweils konzentrisch zueinander liegen. Zwischen den Stützringen 5a und 5b des Mitnahmeelement-Trägers 5 sind zwei an die Oberfläche des kreiszylindrischen Koppelelements 1, dessen Zylinderachse mit der Zylinder-Achse 2 zusammenfällt, angepasste Tragsegmente 5c, 5d vorgesehen. Vergleichbare Tragsegmente 6c, 6d sind Bestandteil des Mitnahmeelement-Trägers 6, wobei sich im zusammengebauten Zustand (gemäß **Fig.1**) sämtliche Tragsegmente 5c, 5d, 6c, 6d annähernd zu einem Hohlzylinder zusammensetzen.

Von jedem Tragsegment 5c, 5d, 6c ,6d erstreckt sich (bezüglich der Zylinder-Achse 2 in Radialrichtung) nach außen ein Tragzapfen 7, die nur in **Fig.2** sichtbar sind, und auf denen jeweils eine Gruppe 3 bzw. 3' bzw. 3" bzw. 3''' von Mitnahmeelementen drehbar gelagert ist. Dies geht aus **Fig.1** hervor, so dass also jeder Tragzapfen 7 der Mitnahmeelement-Träger 5 bzw. 6 eine der genannten Gruppen-Achsen 4 bzw. 4' bzw. 4" bzw. 4''' bildet. Dabei ist die Anordnung so getroffen, dass sich zwei einander benachbarte Gruppen-Achsen (4 und 4' bzw. 4' und 4") bzw. zwei einander benachbarte Tragzapfen 7 in zueinander senkrechte Richtungen erstrecken.

Wie eingangs erwähnt wurde, sollen die beiden Mitnahmeelement-Träger 5, 6 (bzw. allg. die Gruppen-Achsen 4, 4', 4", 4''') unter Zwischenschaltung bzw. Einwirkung des Koppelelementes 1 längs der Zylinder-Achse 2 verschoben werden können, d.h. es soll eine gemeinsame Lageänderung der durch das Koppelelement 1 verbundenen Gruppen-Achsen 4, 4', 4", 4"' möglich sein. Daher ist es nicht ausreichend, wenn die Mitnahmeelement-Träger 5, 6 lediglich auf das Koppelelement 1 aufgesteckt sind, vielmehr müssen sich die Mitnahmeelement-Träger 5, 6 zumindest in Richtung der möglichen Lageänderung betrachtet auch am Koppelelement 1 abstützen (oder speziell an diesem befestigt sein).

Hier ist nun eine Abstützung der Mitnahmeelement-Träger 5, 6 an zwei seitlich derselben vorgesehenen Stützelementen 8a bzw. 8b vorgesehen, an denen die zueinander konzentrischen Stützringe 5a und 6a bzw. 5b und 6b mit ihren äußeren Seitenflächen 9, die im wesentlichen senkrecht zur Zylinder-Achse 2 sind, anliegen. Wie ersichtlich ist jedes Stützelement 8a, 8b ringförmig ausgebildet und in einem am Koppelelement 1 an dessen Endabschnitten befestigten Topf 10a bzw. 10b eingebettet. Bevorzugt bestehen die Stützelemente 8a, 8b aus einem Elastomermaterial und sind somit zwar elastisch verformbar, jedoch weitgehend inkompressibel.

Wenn also das Koppelelement 1 wie eingangs beschrieben längs der Zylinder-Achse 2 bspw. von der genannten Gewindespindel angetrieben in **Fig.1** nach rechts verschoben wird, so werden die beiden Mitnahmeelement-Träger 5, 6 hierbei unter Einwirkung des linksseitigen Stützelementes 8a sowie des linksseitigen Topfes 10a mitgenommen. Wenn hingegen das Koppelelement 1 wie eingangs beschrieben längs der Zylinder-Achse 2 bspw. von der genannten Gewindespindel angetrieben in **Fig.1** nach links verschoben wird, so werden die beiden Mitnahmeelement-Träger 5, 6 hierbei unter Einwirkung des rechtsseitigen Stützelementes 8b sowie des rechtsseitigen Topfes 10b mitgenommen.

Für die gewünschte Funktion des erfindungsgemäßen Kurvenbahngetriebes ist es wesentlich, dass im zusammengebauten Zustand zumindest zwei der Gruppen-Achsen 4, 4', 4", 4''' und hier am bevorzugten Ausführungsbeispiel zumindest die zwei Mitnahmeelement-Träger 5, 6 zumindest geringfügig gegeneinander beweglich sind, und zwar in der für die soeben beschriebene Lageänderung unter Einwirkung des Koppelelementes 1 möglichen Bewegungsrichtung. Das heißt, dass entweder der Mitnahmeelement-Träger 5 gegenüber dem Mitnahmeelement-Träger 6 oder der Mitnahmeelement-Träger 6 gegenüber dem Mitnahmeelement-Träger 5 geringfügig längs der Zylinder-Achse 2 verschiebbar ist. Ferner sollen zumindest zwei der Gruppen-Achsen 4, 4', 4", 4''' und hier am bevorzugten Ausführungsbeispiel zumindest die zwei Mitnahmeelement-Träger 5, 6 gegeneinander abgestützt sein. Dies ist über die hier elastomeren und dabei in die Töpfe 10a bzw. 10b eingebetteten Stützelemente 8a bzw. 8b realisiert.

Zurückkommend auf die eingangs geschilderte Problematik, dass sich bei Vorsehen von mehr als drei Gruppen 3, 3', 3", 3''' von Mitnahmeelementen eine gleichmäßige Aufteilung der zu übertragenden Kraft nicht ohne weiteres einstellt, ist nun hier eine gewünschte gleichmäßige Kraftaufteilung auf die hier vier Gruppen 3, 3', 3", 3''' von Mitnahmeelementen selbsttätig sichergestellt, indem sich die hier beiden Mitnahmeelement-Träger 5, 6 (bzw. allgemein zumindest zwei Gruppen-Achsen) unter Zwischenschaltung der hier elastischen Stützelemente 8a bzw. 8b gegeneinander abstützen.

Bspw. liege die Gruppe 3 der Mitnahmeelemente 3a, 3b ziemlich frei innerhalb der zugehörigen Kurvenbahnen, ohne vollständig an deren Wand anzuliegen und ermögliche somit im wesentlichen keine Kraftübertragung. Unter Einfluss des Mitnahmeelement-Trägers 6 der Gruppen 3' und 3"' von Mitnahmeelementen, die dann vollständig an den zugeordneten Kurvenbahn-Wänden anliegen und somit eine vollständige Kraftübertragung bewerkstelligen, werden daraufhin die beiden Mitnahmeelement-Träger 5 und 6 derart relativ zueinander verschoben, dass auch die erste Gruppe 3 von Mitnahmeelementen an der Kraftübertragung teilhaben kann. Dies erfolgt über eines der beiden Stützelemente 8a bzw. 8b, an denen wie bereits erläutert die Mitnahmeelement-Träger 5, 6 mit ihren zur Zylinder-Achse 2 im wesentlichen senkrechten äußeren Seitenflächen 9 anliegen. Dabei wirkt der zunächst einen größeren Kraftanteil übertragende Mitnahmeelement-Träger 6 stärker pressend auf das Stützelement 8a oder 8b (je nach Belastungsrichtung) ein, als der andere, zunächst einen kleineren Kraftanteil übertragende Mitnahmeelement-Träger 5. Als Folge hiervon wird das elastomere Stützelement 8a bzw. 8b derart verformt, dass quasi Material aus dem an der Seitenfläche 9 des stärker belasteten Mitnahmeelement-Trägers 6 anliegenden Abschnitt in den an der Seitenfläche 9 des schwächer belasteten Mitnahmeelement-Trägers 5 anliegenden Abschnitt verschoben wird. Dies bewirkt die bereits genannte Relativverschiebung der Mitnahmeelement-Träger 5, 6 gegeneinander. Dieser Vorgang erfolgt solange, bis der Anpressdruck, den die beiden Mitnahmeelement-Träger 5 und 6 mit ihren Seitenflächen 9 auf das elastomere Stützelement 8a bzw. 8b ausüben, gleich groß ist.

Wenn nun die Flächeninhalte der betroffenen ringförmigen Seitenflächen 9 der Mitnahmeelement-Träger 5, 6 gleich groß sind, so ist automatisch gewährleistet, dass bei sich - wie geschildert - selbsttätig einstellender Gleichheit des Anpressdrucks auch die gleiche Kraftübertragung durch die beiden Mitnahmeelement-Träger 5, 6 erfolgt. Das genannte Stützelement 8a bzw. 8b wirkt hierbei somit als Zwischenglied oder Übertragungsglied, mit Hilfe dessen eine zunächst stärker an der Kräfteübertragung beteiligte Gruppe von Mitnahmeelementen (im geschilderten Beispielfall der Mitnahmeelement-Träger 6) eine zunächst weniger an der Kräfteübertragung beteiligte andere Gruppe von Mitnahmeelementen (im geschilderten Beispielfall den Mitnahmeelement-Träger 5) derart verschiebt, dass letztlich beide bzw. alle Gruppen von Mitnahmeelementen im wesentlichen gleichermaßen an der aktuellen Kraftübertragung teilhaben. Aufgrund einer zunächst ungleichen Aufteilung der Kraftübertagung zwischen den einzelnen Gruppen von Mitnahmeelementen wird dabei - wie bereits geschildert - das betroffene Stützelement 8a bzw. 8b entsprechend den durch den bereichsweise das jeweilige Stützelement 8a, 8b umgebenden Topf 10a, 10b bestimmten Freiräumen verformt und verschiebt die Mitnahmeelement-Träger 5, 6 im beschriebenen Sinne gegeneinander, nämlich derart, dass beide (bzw. bei Vorhandensein von mehr als zwei Mitnahmeelement-Trägern alle) Mitnahmeelement-Träger 5, 6 im wesentlichen im gleichem Umfang an der Kraftübertragung bzw. Momentenübertragung zwischen den Mitnahmeelementen 3a, 3b, 3a', 3b' usw. und den zugehörigen Kurvenbahn-Trägern beteiligt sind.

Es sind durchaus eine Vielzahl von Abwandlungen vom beschriebenen Ausführungsbeispiel möglich, ohne den Inhalt der Patentansprüche zu verlassen. So müssen die mit dem vorzugsweise (aber nicht ausschließlich) elastomeren Stützelement 8a bzw. 8b, von denen im übrigen bei geeigneter anderer Ausführungsform auch lediglich ein einziges ausreichend sein kann, zusammenwirkenden Seitenflächen 9 der Mitnahmeelement-Träger 5, 6 (oder von vergleichbaren, anderen Elementen) nicht unbedingt ringförmig sein. Besonders vorteilhaft ist jedoch die bereits genannte Flächengleichheit der betroffenen Seitenflächen oder dgl., um tatsächlich eine gleichmäßige Kraftaufteilung zu erzielen. Durch das damit erhaltene gleichmäßige Tragen der Mitnahmeelemente 3a, 3b usw. , die im Ausführungsbeispiel in Form von Rollen ausgebildet sind, wird die je Mitnahmeelement zu übertragende Last reduziert. Dies kann genutzt werden, um die Lebensdauer zu erhöhen oder um höhere Drehmomente übertragen zu können. Dabei ergeben sich durch die Möglichkeit, nunmehr praktisch beliebig viele sog. Gruppen-Achsen 4, 4', 4" usw. einsetzen zu können, sehr kompakt bauende Kurvenbahngetriebe mit hohen Stellmomenten. Dabei stellt die vorgeschlagene, jedoch ausdrücklich nicht hierauf beschränkte Verwendung eines Elastomers für das Stützelement 8a bzw. 8b eine sehr preiswerte und kompakte Lösung dar, jedoch könnten anstelle dessen auch Schwenkhebel oder dgl. zum Einsatz kommen.

### Bezugszeichenliste:

- 1: Koppelelement
- 2: Zylinder-Achse
- 3, 3',: Gruppe von Mitnahmeelementen
- 3", 3''': Gruppe von Mitnahmeelementen
- 3a,3b,3a',3b': Mitnahmeelement
- 3a", 3b": Mitnahmeelement
- 3a''', 3b"': Mitnahmeelement
- 4, 4', 4", 4''': Gruppen-Achse
- 5: Mitnahmeelement-Träger (für die Gruppen 3, 3")
- 5a, 5b: seitlicher Stützring (von 5)
- 5c, 5d: Tragsegment (von 5)
- 6: Mitnahmeelement-Träger (für die Gruppen 3', 3''')
- 6a, 6b: seitlicher Stützring (von 6)
- 6c, 6d: Tragsegment (von 6)
- 7: Tragzapfen
- 8a, 8b: Stützelement
- 9: äußere Seitenfläche von 5a bzw. 5b bzw. 6a bzw. 6b
- 10a, 10b: Topf

## Patentansprüche

1. Kurvenbahngetriebe, insbesondere für den Einsatz in einer geteilten Stabilisatoranordnung eines Fahrzeug-Fahrwerks, wobei mehrere Gruppen (3, 3', 3", 3"') von jeweils auf einer gemeinsamen Achse (4, 4', 4", 4"') angeordneten Mitnahmeelementen (3a, 3b, 3a', 3b', 3a", 3b", 3a"', 3b"') in diesen zugeordneten Kurvenbahnen geführt sind, so dass bei einer gemeinsamen Lageänderung aller durch ein Koppelelement (1) verbundener Gruppen-Achsen (4, 4', 4", 4"') sog. Kurvenbahnträger, in denen die Kurvenbahnen vorgesehen sind, gegeneinander bewegt werden,
**dadurch gekennzeichnet, dass** zumindest zwei Gruppen-Achsen (4, 4', 4", 4"') in deren für die genannte Lageänderung mögliche Bewegungsrichtung betrachtet gegeneinander zumindest geringfügig beweglich sind und nicht nur gegenüber dem Koppelelement (1), sondern auch gegeneinander abgestützt sind.

2. Kurvenbahngetriebe nach Anspruch 1 mit zumindest zwei konzentrisch zueinander angeordneten hohlzylindrischen Kurvenbahnträgern sowie einem auf deren gemeinsamer Zylinder-Achse (2) längsverschiebbaren Koppelelement (1) für die Gruppen-Achsen (4, 4', 4", 4"') von Mitnahmeelementen (3a, 3b, 3a', 3b', 3a", 3b", 3a"', 3b"'),
**dadurch gekennzeichnet, dass** auf dem Koppelelement (1) zumindest zwei Mitnahmeelement-Träger (5, 6) geringfügig gegeneinander beweglich angeordnet sind, deren zur Zylinder-Achse (2) im wesentliche senkrechte Seitenflächen (9) an einem gemeinsamen Stützelement (8a, 8b), das sich seinerseits am Koppelelement (1) abstützt, abgestützt sind.

3. Kurvenbahngetriebe nach Anspruch 2,
**dadurch gekennzeichnet, dass** das Stützelement (8a, 8b) als ein im wesentlichen ringförmiges Elastomerelement ausgeführt und in einem am Koppelelement (1) befestigten Topf (10a, 10b) eingebettet ist.

4. Kurvenbahngetriebe nach einem der Ansprüche 2 bis 3,
**dadurch gekennzeichnet, dass** die Mitnahmeelement-Träger (5, 6) zueinander konzentrisch auf dem Koppelelement (1) angeordnet sind und dass an beiden äußeren Seitenflächen (9) der Mitnahmeelement-Träger (5, 6) ein Stützelement (8a, 8b) vorgesehen ist.

5. Kurvenbahngetriebe nach einem der Ansprüche 2 bis 4,
**dadurch gekennzeichnet, dass** sich zumindest ein Mitnahmeelement-Träger (5, 6) ausgehend von der Zylinder-Achse (2) der Kurvenbahnträger in verschiedene Radial-Richtungen erstreckt und somit zumindest zwei Gruppen (3, 3', 3", 3"') von Mitnahmeelementen (3a, 3b, 3a', 3b', 3a", 3b", 3a"', 3b"') trägt.

## Claims

1. A curved path transmission, more especially for use in a split stabiliser arrangement of a vehicle chassis, a plurality of groups (3, 3', 3", 3"') of drive elements (3a, 3b, 3a', 3b' 3a", 3b", 3a"', 3b"') arranged in each case on a common axis (4, 4', 4", 4"') being guided in curved paths associated therewith, so that when there is a collective change in position of all the axis groups (4, 4', 4", 4"') which are connected by a coupling element (1), so-called curved path carriers in which the curved paths are provided are moved with respect to one another, **characterised in that** at least two axis groups (4, 4', 4", 4"') may be moved at least slightly with respect to one another seen in the direction of movement thereof which is possible for the mentioned change in position and are supported not only with respect to the coupling element (1), but also with respect to one another.

2. A curved path transmission according to claim 1 with at least two hollow cylindrical curved path carriers arranged concentrically to one another as well as a coupling element (1), which may be moved longitudinally on the common cylinder axis (2) thereof, for the axis groups (4, 4', 4", 4"') of drive elements (3a, 3b, 3a', 3b' 3a", 3b", 3a"', 3b"'), **characterised in that** at least two drive element supports (5, 6) are arranged on the coupling element (1) being slightly movable with respect to one another, their side faces (9) which are substantially perpendicular to the cylinder axis (2) being supported on a common supporting element (8a, 8b) which, for its part, is supported on the coupling element (1).

3. A curved path transmission according to claim 2, **characterised in that** the supporting element (8a, 8b) is configured as a substantially annular elastomeric element and is embedded in a cup (10a, 10b) secured to the coupling element (1).

4. A curved path transmission according to either claim 2 or claim 3, **characterised in that** the drive element supports (5, 6) are positioned concentrically to one another on the coupling element (1) and **in that** a supporting element (8a, 8b) is provided on both outer side faces (9) of the drive element supports (5, 6).

5. A curved path transmission according to any one of claims 2 to 4, **characterised in that** at least one drive element support (5, 6) extends in different radial directions emanating from the cylinder axis (2) of the curved path carriers and thus supports at least two groups (3, 3', 3", 3"') of drive elements (3a, 3b, 3a', 3b' 3a", 3b", 3a"', 3b"').

## Revendications

1. Transmission à chemins de came notamment destinée à un dispositif stabilisateur divisé d'un châssis de véhicule, selon lequel plusieurs groupes (3, 3', 3", 3"') d'éléments d'entraînement (3a, 3b, 3a', 3b', 3a", 3b", 3a"', 3b"') installés respectivement sur un axe commun (4, 4', 4", 4"'), sont guidés dans ces chemins de came associés de façon qu'en cas de variation de position commune de tous les axes de groupe (4, 4', 4", 4"') reliés par un élément de couplage (1), c'est-à-dire le support de chemin de came, dans lesquels il y a des chemins de came sont déplacés les uns par rapport aux autres,
**caractérisée en ce qu'**
au moins deux axes de groupes (4, 4', 4", 4"') sont au moins légèrement mobiles les uns par rapport aux autres considérés dans la direction de mouvement possible pour la variation de position, et ne sont pas appuyés par rapport à l'élément de couplage (1) mais les uns par rapport aux autres.

2. Transmission à chemins de came selon la revendication 1 ayant au moins deux supports de chemins de came cylindriques creux installés de manière concentrique l'un par rapport à l'autre ainsi qu'un élément de couplage (1) coulissant longitudinalement sur leur axe de cylindre (2), commun, pour les axes de groupes (4, 4', 4", 4"') des éléments d'entraînement (3a, 3b, 3a', 3b', 3a", 3b", 3a"', 3b"'),
**caractérisée en ce que**
l'élément de couplage (1) comporte au moins deux supports d'élément d'entraînement (5, 6) installés de manière légèrement mobile l'un par rapport à l'autre et dont les axes de cylindre (2) sont appuyés pratiquement perpendiculairement aux surfaces latérales (9) contre un élément d'appui (8a, 8b) commun, s'appuyant lui-même contre l'élément de couplage (1).

3. Transmission à chemins de came selon la revendication 2,
**caractérisée en ce que**
l'élément d'appui (8a, 8b) est un élément en élastomère, de forme pratiquement annulaire, logé dans un pot (10a, 10b) fixé à l'élément de couplage (1).

4. Transmission à chemins de came selon l'une des revendications 2 et 3,
**caractérisée en ce que**
les supports d'élément d'entraînement (5, 6) sont installés de manière concentrique sur l'élément de couplage (1), et
les deux surfaces latérales extérieures (9) des supports d'élément d'entraînement (5, 6) comportent un élément d'appui (8a, 8b).

5. Transmission à chemins de came selon l'une des revendications 2 à 4,
**caractérisée par**
au moins un support d'élément d'entraînement (5, 6) s'étendant dans diverses directions radiales en partant de l'axe de cylindre (2) du support de chemin de came et portant ainsi au moins deux groupes (3, 3', 3", 3"') d'éléments d'entraînement (3a, 3b, 3a', 3b', 3a", 3b", 3a"', 3b"').
